# EUROPEAN PATENT SPECIFICATION

(11) **EP 4 359 232 B1**
(45) Date of publication and mention of the grant of the patent: **21.05.2025**
(21) Application number: 22736380.1
(22) Date of filing: 22.06.2022
(51) Int. Cl.: B60C 25/05, B60C 25/13, B60C 25/132

(54) **TYRE CHANGING MACHINE, PARTICULARLY FOR LARGE WHEELS**
REIFENWECHSELMASCHINE, SPEZIELL FÜR GROSSE RÄDER
MACHINE DE CHANGEMENT DE PNEUS POUR ROUES GRANDES

(30) Priority: 25.06.2021 IT 202100016793
(43) Date of publication of application: 01.05.2024
(73) Proprietor: Devel Srl, 41042 Fiorano Modenese (MO) (IT)
(72) Inventor: BONETTI, Valentino, 41042 Fiorano Modenese (MO) (IT)
(74) Representative: Brunacci, Marco
(86) International application number: PCT/IB2022/055772
(87) International publication number: WO 2022/269499

(56) References cited:
- EP-A1- 3 636 463
- EP-A1- 3 741 591
- EP-A2- 1 040 941

## Description

### Technical Field

The present invention relates to a tyre changing machine, particularly for large wheels.

### Background Art

It is well known that vehicle wheels comprise a metal rim, commonly known as a rim, having a substantially cylindrical conformation and provided at the ends with annular flaps, commonly known as flanges, on which the beads with which the tyre is fitted interlock.

Particularly, the rim comprises a first flange and a second flange which can be associated with a first bead and with a second bead, respectively, with which the tyre is provided.

The tyre changing machines allow the tyre to be removed from the rim to perform, e.g., maintenance and/or replacement jobs of the wheel components and then refit the same tyre, or a replacement one, onto the rim.

The tyre changing machines for large wheels comprise a holding frame onto the ground and wheel gripping and rotational means, which are associated with the same base frame in a sliding manner along a substantially vertical axis.

The gripping and rotational means allow both the wheel to be held on the machine, preventing it from falling to the ground while the tyre changing machine is in use, and to be set in rotation with respect to the holding frame, around a substantially horizontal axis, to facilitate the tyre removal operation.

Large wheels of the type, e.g., of truck wheels and/or agricultural equipment wheels and/or earthmoving equipment wheels, are difficult to handle manually and, specifically, it can be very difficult for an operator to lift them manually.

Thanks to the possibility of letting the gripping and rotational means slide along a substantially vertical direction of sliding, it is possible to engage the wheel still positioned on the ground and lift it to a useful position to perform the tyre removal. Particularly, it is possible to pick up the wheel from the ground after an operator has brought the wheel itself closer to the tyre changing machine by rolling it on the ground.

After placing the wheel onto the tyre changing machine, the bead-breaking step is carried out which involves detaching each tyre bead from its rim flange, and the subsequent removal of the tyre from the rim.

A first type of tyre changing machine of known type, which can be used to operate on large wheels, is shown in patent document EP 3 741 591 and comprises a holding frame onto the ground, provided with at least one post element and with at least one crossbar element associated with the upper end of the post element.

The gripping and rotational means of the above-mentioned tyre changing machine are associated with the post element in a sliding manner and are positioned below the crossbar element.

The wheel is taken by the gripping and rotational means so that the first bead faces the post element and the second bead faces outwards.

Additionally, the tyre changing machine described in patent document EP 3 741 591 comprises a first and a second bead-breaking tool and a thrust roller.

Appropriately, the bead-breaking tools are forcibly fitted between the beads and their flanges to promote the detachment thereof and, therefore, operate mainly on the beads and on the tyre sidewall itself to a small extent.

The thrust roller, on the other hand, exerts a thrust on the outermost sidewall of the tyre with respect to the tyre changing machine and in the opposite direction to the thrust exerted by the first bead-breaking assembly on the first bead; this results in the second bead coming out of the rim.

At this point, the first bead is placed inside the rim channel and the first bead-breaking tool exerts a thrust thereon in order to allow it to come out of the rim, thus completely disassembling the tyre from the rim.

The tyre changing machines made according to the teachings of patent document EP 3 741 591 are susceptible to some refinements.

Specifically, during the use of the aforementioned tyre changing machines, there is a particular need to limit the difficulties that may be encountered during the phase of tyre removal from the rim.

Particularly, during the release of the first bead from the rim, the first bead-breaking tool exerts a thrust on the first bead itself along a substantially horizontal direction bringing it to a stop on the second flange, which may hinder the coming out of the rim and/or damage it.

Again, the tyre changing machines belonging to the first type are often cumbersome and their components, especially the second bead-breaking assembly, can interfere with and/or hinder the operators' job.

A second type of tyre changing machine, which can be used particularly for large wheels, is known from patent document EP 1 040 941 and comprises a holding frame onto the ground provided with at least one post element and at least one crossbar element associated with the upper end of the post element.

Additionally, the tyre changing machine belonging to the second type comprises wheel gripping and rotational means, associated with the post element in a sliding manner, and a first bead-breaking tool and a second bead-breaking tool, associated with the crossbar element and projecting downwards.

Precisely, the first bead-breaking tool and the second bead-breaking tool are located to the right and to the left of the wheel gripping and rotational means, respectively, and, in detail, they are allocated at the centerline of the wheel, when it is fastened to the gripping and rotational means themselves.

However, tyre changing machines made according to the teachings of patent document EP 1 040 941 do have some drawbacks which are partly attributable to the difficulties that may be encountered during the use of tyre changing machines belonging to the first type.

Particularly, during the phase of tyre coming out of the rim, performed through the tyre changing machines of the second type, the second bead is pushed on the second flange which may hinder its coming out of the rim and/or cause damage to the tyre itself.

Another type of tyre changing machine is known from patent document EP 3 636 463.

### Description of the Invention

The main aim of the present invention is to devise a tyre changing machine, particularly for large wheels, which allows facilitating the phase of coming out of the tyre from the rim.

Within the scope of this aim, one object of the present invention is to devise a tyre changing machine, particularly for large wheels, which allows facilitating the coming out of the first bead from the rim by limiting the friction thereof with the rim itself.

Another object of the present invention is to devise a tyre changing machine, particularly for large wheels, which allows reducing the damage suffered by the tyre during the relevant removal.

A further object of the present invention is to devise a tyre changing machine, particularly for large wheels, which allows reducing the overall dimensions of the tyre changing machine itself, thereby improving the operators' job.

Another object of the present invention is to devise a tyre changing machine, particularly for large wheels, which allows the aforementioned drawbacks of the prior art to be overcome within the framework of a simple, rational, easy and effective to use as well as affordable solution.

The aforementioned objects are achieved by this tyre changing machine, particularly for large wheels, having the characteristics of claim 1.

### Brief Description of the Drawings

Other characteristics and advantages of the present invention will become more apparent from the description of a preferred, but not exclusive, embodiment of a tyre changing machine, particularly for large wheels, illustrated by way of an indicative, yet non-limiting example in the attached tables of drawings wherein:

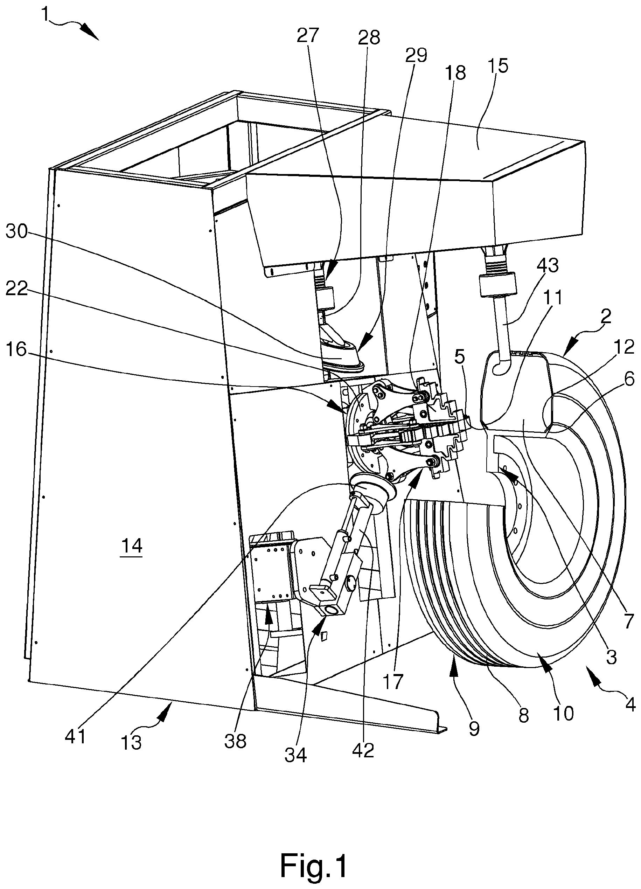

Figure 1 is an axonometric view of the tyre changing machine according to the invention and of a wheel partly in section;

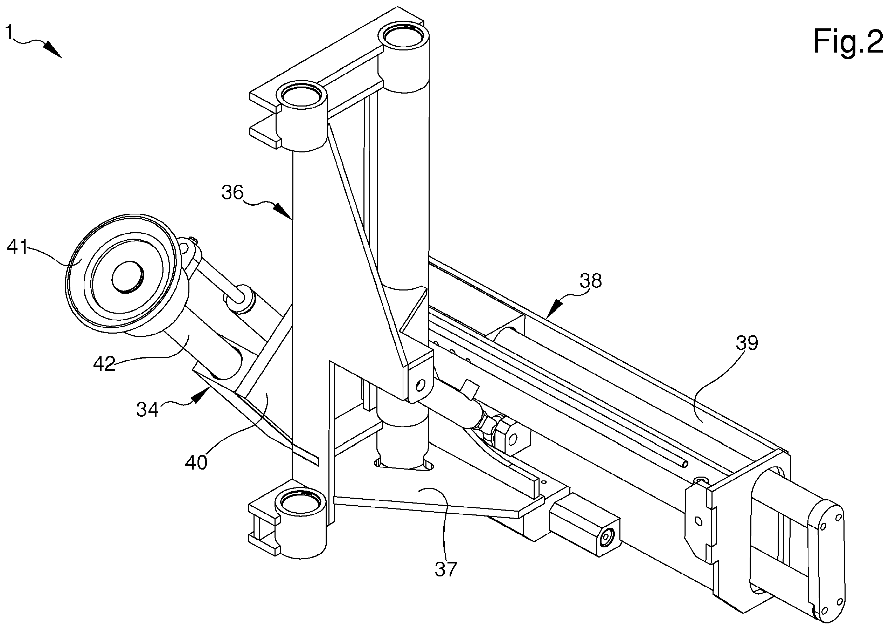

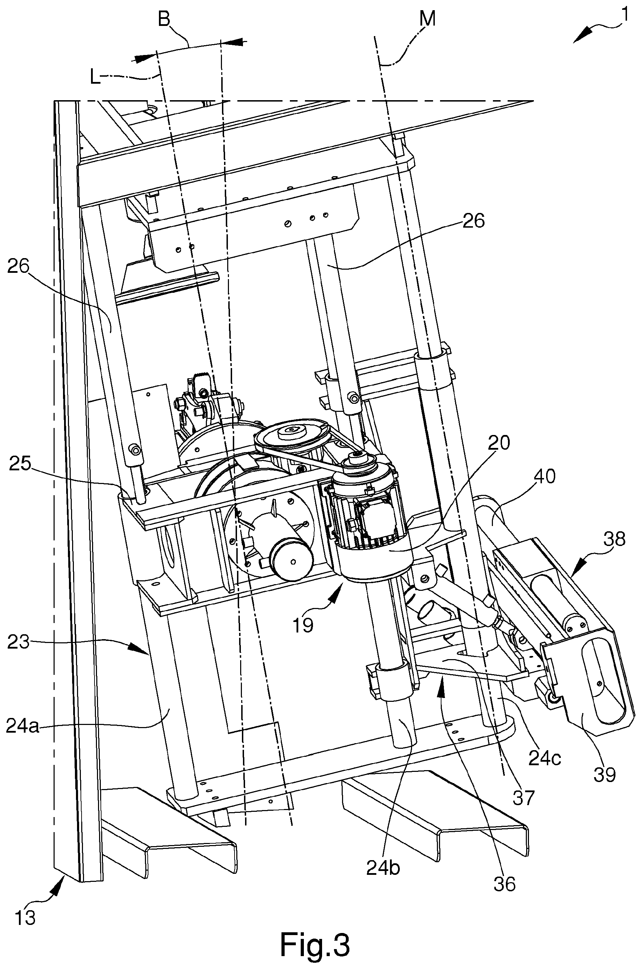

Figure 2 and Figure 3 are axonometric views of different components of the tyre changing machine according to the invention;

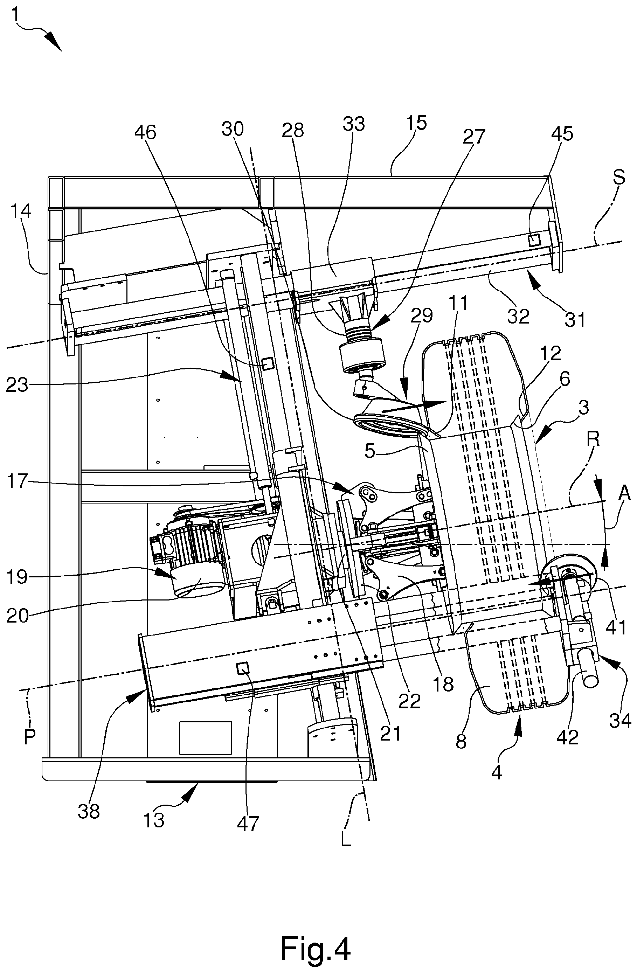

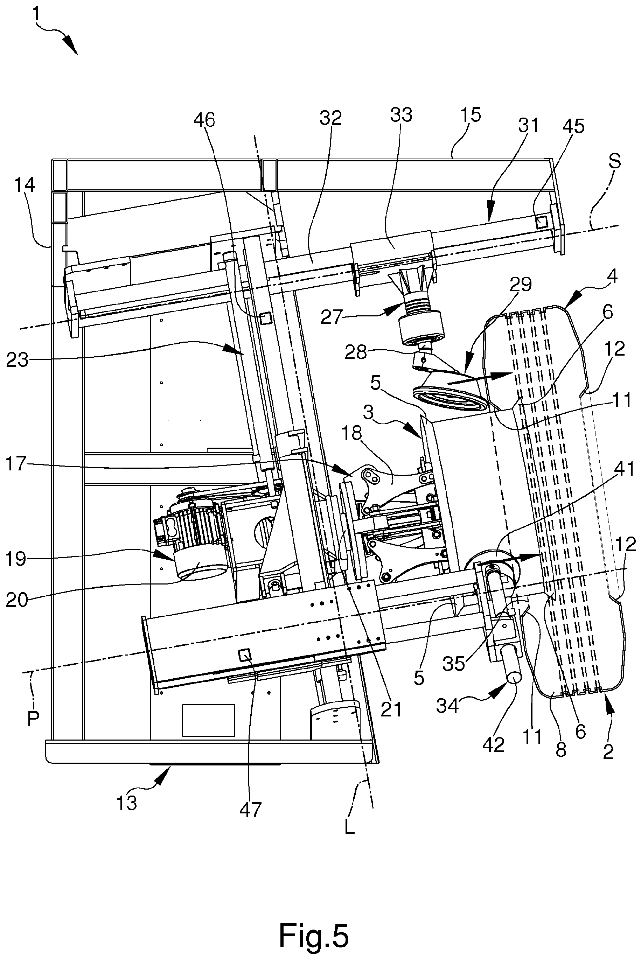

Figure 4 and Figure 5 are side views of the tyre changing machine according to the invention during two different machining stages and of the wheel partly in section;

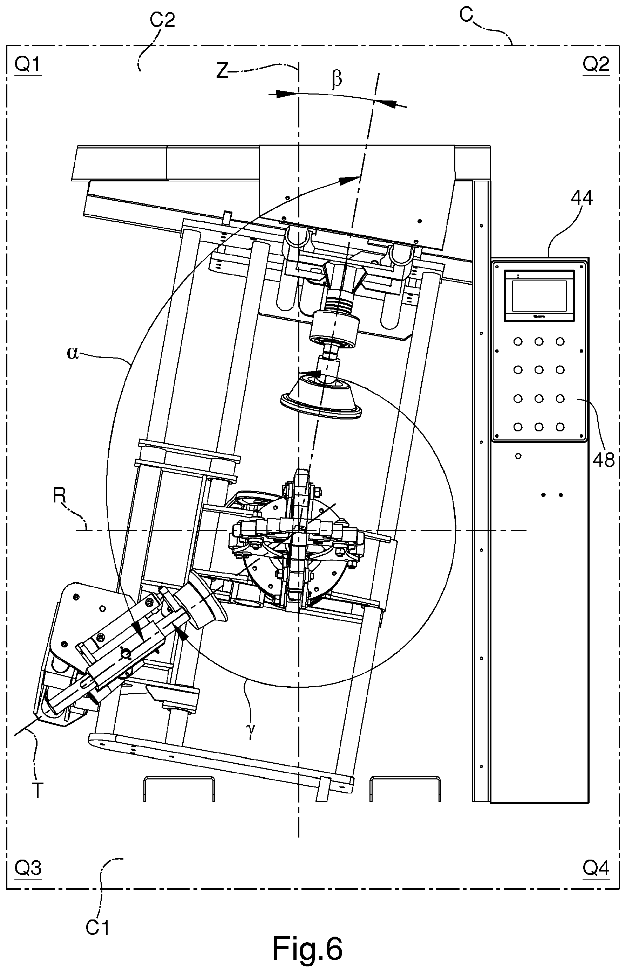

Figure 6 is a front view of the tyre changing machine according to the invention.

### Embodiments of the Invention

With particular reference to these figures, reference numeral 1 globally indicates a tyre changing machine, particularly for large wheels, which can be used to remove and fit a tyre 2 from and onto the rim 3 of a wheel 4.

In the context of this disclosure, as will be better explained below, the terms "substantially horizontal" and "substantially vertical" mean, respectively, a direction that is within ± 40° of the horizontal plane and a direction that is within ± 40° of the vertical plane.

The tyre changing machine 1 comprises at least one holding frame 13 onto the ground.

Preferably, the holding frame 13 comprises at least one post element 14 and at least one crossbar element 15 associated with the upper end of the post element 14.

The holding frame 13, e.g., comprises metal holding bars mutually associated to form a lattice structure resting on the ground and containing walls associated with the holding bars.

Specifically, the post element 14 comprises holding bars having a substantially vertical extension and, inferiorly, is provided with a bedplate directly contacting the ground.

The crossbar element 15 comprises holding bars having a substantially horizontal extension which cantilever from the post element 14 outwards.

Alternative embodiments of the tyre changing machine 1 cannot however be ruled out wherein the post element 14 and the crossbar element 15 have different conformation; for example, embodiments are provided wherein there are two post elements 14 allocated, respectively, at the two ends of the crossbar element 15, to conform a bridge-like structure.

The tyre changing machine 1 comprises gripping and rotational means 16 associated with the holding frame 13, adapted to grip the wheel 4, provided with the rim 3 and the tyre 2, and to move the rim 3 in rotation around a substantially horizontal axis of rotation R.

The rim 3 comprises at least a first flange element 5 and at least a second flange element 6 and the tyre 2 comprises at least a first sidewall 9, provided with at least a first bead 11 approachable to the first flange element 5, and at least a second sidewall 10, provided with at least a second bead 12 approachable to the second flange element 6.

The rim 3 is made of metal material, has a substantially cylindrical conformation and comprises at its ends the first flange element 5 and the second flange element 6, which are substantially annular flaps against which the tyre 2 abuts.

Between the first flange element 5 and the second flange element 6 is defined the channel 7 of the rim 3, i.e. the inner portion of the rim 3 which is not visible from the outside when the tyre 2 is mounted on the rim 3.

When using the tyre changing machine 1, the first flange element 5 and the second flange element 6 face towards the tyre changing machine 1 and outwards, respectively, i.e., opposite to the tyre changing machine 1.

The tyre 2 has a substantially ring conformation and comprises a tread 8 that contacts the ground during the use of the wheel 4.

Additionally, the tyre 2 comprises the first sidewall 9 and the second sidewall 10, which run substantially transverse to the tread 8.

The first sidewall 9 and the second sidewall 10 are provided with the first bead 11 and with the second bead 12, respectively, allocated on the opposite side from the tread 8.

In the context of this disclosure, the term "fitted/mounted", when referring to the first bead 11 and/or to the second bead 12, is intended to indicate the condition wherein the first bead 11 and/or the second bead 12 are allocated between the first flange element 5 and the second flange element 6, i.e., arranged within the channel 7.

Likewise, "removed" refers to the condition wherein the first bead 11 and/or the second bead 12 are allocated in a space that is not between the first flange element 5 and the second flange element 6.

As previously anticipated, the term "substantially horizontal" is intended to indicate a direction that is between ± 40° from the horizontal plane.

This means that the axis of rotation R is inclined by a first angle A with respect to the horizontal plane, wherein the first angle A may vary between -40° (a condition wherein the axis of rotation R extends from the post element 14 downwards), to +40° (a condition wherein the axis of rotation R extends from the post element 14 upwards), passing, for example, through 0° (a condition wherein the axis of rotation R is perfectly horizontal).

Preferably, the first angle A has an amplitude between 0° and 35°, or between 1 and 10°, or between 3° and 7°, and better still equal to 5°.

The advantageous use of a first angle A greater than zero means that the wheel 4 is partly inclined towards the tyre changing machine 1, when mounted on the gripping and rotational means 16, thus limiting the occurrence of unpleasant accidents due to the accidental dropping of the wheel 4 due to its possible detachment from the gripping and rotational means 16.

Usefully, the gripping and rotational means 16 comprise:
- at least one gripping unit 17 comprising a plurality of jaws 18, preferably of the self-centering type, adapted to grip the rim 3;
- at least one driving unit 19 to set the gripping unit 17 in rotation around the axis of rotation R, comprising:
   - at least one electric motor 20;
   - at least one drive shaft 21 running along the axis of rotation R, which is associated with the electric motor 20 and on which the gripping unit 17 is fitted.

The gripping and rotational means 16 are allocated at the post element 14.

The gripping unit 17 comprises a disk-shaped element 22 centrally fitted on the drive shaft 21.

The jaws 18 are mounted on the edge of the disk-shaped element 22 in a substantially radial manner.

In the particular embodiment shown in the figures, there are four jaws 18 angularly arranged at regular intervals, that is, offset by 90°.

Alternative embodiments cannot however be ruled out wherein the jaws 18 are present in a different number; for example, there may be two jaws 18 allocated in diametrically opposite positions or three jaws 18 offset by 120°, or six jaws 18 offset by 60°.

Each jaw 18 is rotatable with respect to the disk-shaped element 22 around an axis substantially orthogonal to the axis of rotation R, so that the rim 3 can be grasped. The tyre changing machine 1 comprises lifting/lowering means 23 of the gripping and rotational means 16 along a substantially vertical lifting/lowering direction L. The lifting/lowering means 23 are associated with the holding frame 13.

In detail, the lifting/lowering means 23 are allocated at the post element 14.

As previously anticipated, the term "substantially vertical" is intended to indicate a direction that is within ± 40° from the vertical plane.

This means that the lifting/lowering direction L is inclined by a second angle B with respect to the vertical plane, wherein the second angle B may vary between - 40° (a condition wherein the lifting/lowering direction L extends from the bedplate of the post element 14 upwards, away from the portion of the post element 14 positioned to the right of the gripping and rotational means 16 with respect to an observer standing frontally to the tyre changing machine 1), to +40° (a condition wherein the lifting/lowering direction L extends from the bedplate of the post element 14 upwards, away from the portion of the post element 14 positioned to the left of the gripping and rotational means 16 with respect to an observer standing frontally to the tyre changing machine 1), passing, e.g., through 0° (a condition wherein the lifting/lowering direction L is perfectly vertical).

Preferably, the second angle B has amplitude between 0° and -20°, or between -15° and -5°, or between -12° and -8°, and better still equal to -10°.

This creates a useful working space for the operator, who can easily access the wheel 4 while using the tyre changing machine 1.

Conveniently, the lifting/lowering means 23 comprise at least one guiding assembly 24a, 24b, 24c having a substantially longitudinal extension along the lifting/lowering direction L.

Precisely, the guiding assembly 24a, 24b, 24c comprises a first tubular element 24a, a second tubular element 24b and a third tubular element 24c which extend longitudinally along the lifting/lowering direction L.

In detail, the tubular elements 24a, 24b and 24c are mutually aligned in a plane substantially perpendicular to the axis of rotation R and, specifically, the second tubular element 24b is located between the first tubular element 24a and the third tubular element 24c.

Advantageously, the lifting/lowering means 23 comprise at least one sliding element 25 associated with the guiding assembly 24a, 24b, 24c in a sliding manner along the lifting/lowering direction L.

The gripping and rotational means 16 are associated with the sliding element 25. Precisely, the sliding element 25 is of the type of a slide fitted on the first tubular element 24a and on the second tubular element 24b in a sliding manner.

Usefully, the lifting/lowering means 23 comprise at least one actuator device 26 associated with the holding frame 13 and with the sliding element 25 and adapted to move the sliding element 25 in a sliding manner with respect to the guiding assembly 24a, 24b, 24c.

The tyre changing machine 1 comprises at least a first bead-breaking assembly 27 adapted to break the first bead 11 when mounted on the rim 3 and associated with the holding frame 13 in a sliding manner along at least one substantially horizontal direction of sliding S.

In detail, the first bead-breaking assembly 27 comprises a first arm 28 associated with one end below the crossbar element 15 and projecting downwards.

Additionally, the first bead-breaking assembly 27 comprises a bead-breaking element 29, associated with the free end of the first arm 28, having a substantially truncated-cone conformation and comprising a projecting portion 30 having a substantially annular conformation.

During the use of the tyre changing machine 1, as will be better described later, the bead-breaking element 29 is forcibly fitted between the first bead 11 and the first flange element 5 thereby promoting the ungluing of the first bead 11 from the first flange element 5.

Conveniently, the tyre changing machine 1 comprises sliding means 31 of the first bead-breaking assembly 27 along the direction of sliding S.

The sliding means 31 are associated with the holding frame 13.

Specifically, the sliding means 31 are adapted to make the first bead-breaking assembly 27 slide with respect to the crossbar element 15 along the direction of sliding S.

This makes it possible to allocate the first bead-breaking assembly 27 in a useful position to work on the first bead 11.

Usefully, the sliding means 31 comprise:
- at least one sliding rail 32 associated with the crossbar element 15 and extending along the direction of sliding S;
- at least one slide 33 associated with the sliding rail 32 in a sliding manner along the direction of sliding S, the first bead-breaking assembly 27 being fitted on the slide 33;
- at least one actuator element associated with the holding frame 13 and with the slide 33 to move the slide 33 along the sliding rail 32.

In the particular embodiment shown in the figures, the sliding rail 32 comprises two bar elements extending longitudinally to the direction of sliding S.

Alternative embodiments cannot however be ruled out wherein the sliding rail 32 has a different conformation and wherein, e.g., it comprises a different number of bars on which the slide 33 runs.

The tyre changing machine 1 comprises at least a second bead-breaking assembly 34 adapted to break the second bead 12 when mounted on the rim 3, associated in a movable manner with the holding frame 13 and alternatively positionable in at least a first work configuration, wherein it is positioned at the second bead 12, and in at least a second work configuration, wherein it is positioned at the first bead 11 and is adapted to exert a thrust on the tyre 2 along a direction of thrust P substantially parallel to the axis of rotation R.

In actual facts, during the use of the tyre changing machine 1, there is a bead-breaking phase wherein the first bead-breaking assembly 27 breaks the first bead 11 and the second bead-breaking assembly 34, allocated in the first work configuration, breaks the second bead 12.

During the bead-breaking phase, the wheel 4 is moved in rotation around the axis of rotation R so as to facilitate the detachment of the beads 11, 12 from the flange elements 5, 6 all along the perimeter edge of the rim 3.

Once the bead-breaking phase is completed, the second bead 12 comes completely out of the rim 3 and tends to fall, by gravity, downwards; the first bead 11 sits inside the channel 7.

Precisely, the upward-facing portion of the first bead 11 rests in the channel 7, and the downward-facing portion of the first bead 11 moves away from the rim 3 defining, together with the rim 3 itself, a slot 35.

Following the bead-breaking phase, there is a complete removal phase of the tyre 2 from the rim 3 that leads to the coming out of both beads 11, 12 from the rim 3 itself.

At this stage, the second bead-breaking assembly 34 is placed in the second work configuration and, specifically, it is partly allocated in the first slot 35 and pushes the first bead 11 along the direction of thrust P, abutting against the relevant lower portion.

At the same time, the first bead-breaking assembly 27 pushes on the first bead 11 abutting against the relevant upper portion.

At the same time, the wheel 4 is set in rotation around the axis of rotation R as a result of the actuation of the gripping and rotational means 16.

The coming out of the tyre 2 from the rim 3 is facilitated, since the first bead 11, in its lower portion, is not obstructed by the second flange element 6 and the thrust to be exerted is greatly reduced.

Such operation of the tyre changing machine 1 is made possible thanks to the special positioning of the first bead-breaking assembly 27 and of the second bead-breaking assembly 34 with respect to the wheel 4 when fitted on the gripping and rotational means 16.

According to the invention, the gripping and rotational means 16 are adapted to define at least one working plane C of the tyre changing machine 1.

The working plane C is substantially perpendicular to the axis of rotation R and is splittable into at least one lower half-plane C1, positioned inferiorly to the axis of rotation R, and at least one upper half-plane C2 positioned superiorly to the axis of rotation R.

The first bead-breaking assembly 27 is positioned at the upper half-plane C2 and the second bead-breaking assembly 34 is positioned at the lower half-plane C1.

In other words, the first bead-breaking assembly 27 and the second bead-breaking assembly 34 are allocated at the upper and lower halves of the wheel 4, respectively, when fitted on the gripping and rotational means 16.

In this way, the second bead-breaking assembly 34 can be positioned at the slot 35, and the first bead-breaking assembly 27 can be positioned at the upper portion of the first bead 11, thus facilitating the complete coming out of the tyre 2 from the rim 3.

The bead-breaking assemblies 27, 34 are mutually staggered by a staggering angle α ranging between 90° and 180°.

Preferably the staggering angle α has an amplitude between 100° and 170°, or between 110° and 160°, or between 120° and 150°, preferably 135°.

In the context of the present disclosure, the staggering angle α is the part of the plane between the two half lines connecting, respectively, the point of incidence of the axis of rotation R on the working plane C to the first bead-breaking assembly 27 and to the second bead-breaking assembly 34.

In other words, when the wheel 4 is fitted on the gripping and rotational means 16, the staggering angle α is the part of the plane between the two half lines connecting the geometric center of the wheel 4 to the first bead-breaking assembly 27 and to the second bead-breaking assembly 34, respectively.

The special expedient of providing that the staggering angle α has an amplitude of the type just described allows the first bead-breaking assembly 27 and the second bead-breaking assembly 34 to operate on the first bead 11 and on the second bead 12, respectively, at two points of the wheel 4 belonging to two opposite circular quadrants, thus promoting the detachment of the beads 11, 12 from their respective flange elements 5, 6.

Precisely, as can be seen in the figures, the working plane C is splittable into at least a first quadrant Q1, into at least a second quadrant Q2, into at least a third quadrant Q3, positioned below the first quadrant Q1, and into at least a fourth quadrant Q4, positioned below the second quadrant Q2.

The first bead-breaking assembly 27 is positioned at the second quadrant Q2, and the second bead-breaking assembly 34 is positioned at the third quadrant Q3.

Usefully, the first bead-breaking assembly 27 is oriented with respect to a substantially vertical axis of orientation Z by a first angle of inclination β, ranging between 0° and 90°.

Preferably the first angle of inclination β has an amplitude ranging between 2° and 45°, or between 4° and 25°, or between 6° and 15°, better still 10°.

Advantageously, the second bead-breaking assembly 34 is oriented with respect to the axis of orientation Z by a second angle of inclination γ, ranging between 190° and 260°.

Preferably the second angle of inclination γ has an amplitude ranging between 200° and 245°, or between 210° and 230°, or between 215° and 225°, better still 220°.

Advantageously, the tyre changing machine 1 comprises movement means 36 of the second bead-breaking assembly 34 along at least one substantially vertical direction of movement M.

The movement means 36 are associated with the holding frame 13.

Preferably, the movement means 36 comprise at least one sliding carriage 37 mounted on the guiding assembly 24a, 24b, 24c in a sliding manner along the direction of movement M.

The second bead-breaking assembly 34 is associated with the sliding carriage 37. In the particular embodiment shown in the figures, the sliding carriage 37 is mounted sliding on the second tubular element 24b and on the third tubular element 24c.

Usefully, the sliding element 25 is adapted to contact the sliding carriage 37 and to move it along the direction of movement M, the sliding element 25 being moved along the lifting/lowering direction L.

In actual facts, the sliding element 25 is positioned inferiorly to the sliding carriage 37 and, when moved along the lifting/lowering direction L, it engages the sliding carriage 37 and drags it, by moving it along the direction of movement M.

In detail, when the sliding element 25 goes up, it pushes the sliding carriage upwards; on the other hand, when the sliding element 25 goes down, the sliding element 25 leans against it and drops by gravity.

In other words, the gripping and rotational means 16 and the second bead-breaking assembly 34 are moved vertically always together, thus keeping substantially unchanged the distance between the second bead-breaking assembly 34 and the axis of rotation R, i.e., between the second bead-breaking assembly 34 and the geometric center of the wheel 4.

Advantageously, the tyre changing machine 1 comprises means for setting in motion 38 the second bead-breaking assembly 34 between the first work configuration and the second work configuration.

The means for setting in motion 38 are associated with the movement means 36. In actual facts, during the sliding of the second bead-breaking assembly 34 along the direction of movement M, the means for setting in motion 38 are also simultaneously moved.

Preferably, the means for setting in motion 38 comprise:
- at least one holding element 39 hinged to the sliding carriage 37 around an axis substantially parallel to the axis of rotation R;
- at least one translation element 40 sliding with respect to the holding element 39 along the direction of thrust P, the second bead-breaking assembly 34 being associated with the translation element 40;
- at least a first actuation unit associated with the sliding carriage 37 and with the holding element 39 for the rotation of the holding element 39; and
- at least a second actuation unit associated with the holding element 39 and with the translation element 40 for the sliding of the translation element 40.

The holding element 39 has a substantially plate-shaped conformation and is hinged to the sliding carriage 37.

The first actuation unit is associated with the holding element 39 and allows the rotation thereof by alternately placing it in a first, substantially vertical position and in a second, substantially horizontal position.

The second bead-breaking assembly 34 is attached to the translation element 40 and, therefore, is also sliding with respect to the holding element 39 along the direction of thrust P.

The second actuation unit is attached to the holding element 39 and to the translation element 40 and allows the translation element 40 to slide along the direction of thrust P.

During the bead-breaking phase, the second bead-breaking assembly 34 is positioned to the first work configuration, by first placing the holding element 39 in a horizontal position and then making the translation element 40 slide away from the post element 14 so that the second bead-breaking assembly 34 is positioned outside the wheel 4.

Next, the holding element 39 is allocated to the vertical position, through the actuation of the first actuation unit, and the translation element 40 is translated towards the wheel 4, through the actuation of the second actuation unit.

In this way, the second bead-breaking assembly 34 is between the second bead 12 and the second flange element 6 and, by continuing to translate the translation element 40 towards the wheel 4, the second bead 12 can be broken.

Next, to position the second bead-breaking assembly 34 to the second working configuration, the second actuation unit is operated to slide the translation element 40 away from the wheel 4, and then the holding element 39 is positioned horizontally thanks to the intervention of the first actuation unit.

At this point, the second actuation unit again makes the translation element 40 slide towards the post element 14 and the first actuation unit positions the holding element 39 vertically, thus allocating the second bead-breaking assembly 34 between the post element 14 and the wheel 4.

Next, the second actuation unit makes the translation element 40 slide towards the wheel 4 so that the second bead-breaking assembly 34 pushes on the first bead 11. Usefully, the second bead-breaking assembly 34 comprises at least one bead-breaking device 41 having a substantially truncated-cone conformation and associated with the translation element 40 in a rotatable manner around a rolling axis T substantially incident and perpendicular to the axis of rotation R.

Precisely, the second bead-breaking assembly 34 comprises a second arm 42 associated, at one end, with the translation element 40 and on the end of which the bead-breaking device 41 is fitted in a rotatable manner.

The rolling axis T coincides with the longitudinal axis of the second arm 42.

During the setting in rotation of the wheel 4, through the gripping and rotational means 16, i.e., during both the bead-breaking phase and the complete disassembly phase of the tyre 2, the bead-breaking device 41 rolls around the rolling axis T without sliding on the tyre 2, except to an extremely small extent, so as not to damage the tyre 2 itself.

The rolling axis T takes different orientations in space depending on the positioning of the second bead-breaking assembly 34.

When the second bead-breaking assembly 34 is positioned in the first work configuration and in the second work configuration, the rolling axis T is incident and perpendicular to the axis of rotation R and faces the geometric center of the wheel 4.

This particular positioning of the rolling axis T allows for an increased contact area between the bead-breaking device 41 and the tyre 2.

Advantageously, the tyre changing machine 1 comprises a thrust tool 43 associated with the crossbar element 15 and protruding downwards.

The thrust tool 43 is used during the mounting stage of the tyre 2 onto the rim 3, which, for representational simplicity, is not shown in the figures.

Particularly, at that stage, the wheel 4 is made to rotate around the axis of rotation R, and to promote the positioning of the second bead 12 inside the channel 7, the bead-breaking device 41 pushes on the second bead 12, in its lower portion, while the thrust tool 43 pushes on the second bead 12, in the relevant upper portion.

In this way, the presence of an auxiliary thrust point to the one identified by the bead-breaking device 41 prevents the portion of the second bead 12 that entered the channel 7 thanks to the bead-breaking device 41 from escaping during the rotation of the wheel 4.

Advantageously, the tyre changing machine 1 comprises at least one management and control unit 44 adapted to manage the operation of the tyre changing machine 1.

In the particular embodiment shown in the figures, the management and control unit 44 is associated with the post element 14 and is substantially an electronic processor which manages the operation of the tyre changing machine 1.

Advantageously, the tyre changing machine 1 comprises position sensing means 45, 46, 47 associated with the holding frame 13, operatively connected to the management and control unit 44 and adapted to sense the position of the gripping and rotational means 16, of the first bead-breaking assembly 27 and of the second bead-breaking assembly 34 with respect to the holding frame 13.

The position sensing means 45, 46, 47 comprise first linear transducers 45, allocated in the proximity of the sliding rail 32 and adapted to sense the distance of the slide 33 from the post element 14 and to communicate this datum to the management and control unit 44.

In this way, the management and control unit 44 can take targeted action on the operation of the actuator element, thus allocating the first bead-breaking assembly 27 in a suitable position to ensure the proper operation of the tyre changing machine 1.

In other words, the management and control unit 44 is configured to adjust the sliding level of the slide 33 with respect to the crossbar element 15 so that the bead-breaking element 29 may be fitted between the first bead 11 and the first flange element 5.

The management and control unit 44 also intervenes in the operation of the lifting/lowering means 23 and, specifically, adjusts the operation of the actuator device 26.

In this regard, the position sensing means 45, 46, 47 comprise second linear transducers 46 allocated in the proximity of the guiding assembly 24a, 24b, 24c that sense the height of the sliding element 25 and that communicate this datum to the management and control unit 44.

The management and control unit 44 intervenes, if necessary, on the actuator device 26 thus changing the height of the sliding element 25.

Advantageously, the tyre changing machine 1 comprises third linear transducers 47 operatively connected to the management and control unit 44 and adapted to sense the position of the second bead-breaking assembly 34 with respect to the holding frame 13.

Specifically, the third linear transducers 47 are fitted on the holding element 39 and sense the distance of the second bead-breaking assembly 34 from the holding element 39.

The management and control unit 44 adjusts the operation of the means for setting in motion 38 depending on the position of the second bead-breaking assembly 34 and, specifically, operates on the first actuation unit and on the second actuation unit.

The tyre changing machine 1 comprises at least one user interface 48 connected to the management and control unit 44 for the control of the tyre changing machine 1 by an operator.

Conveniently, the user interface 48 comprises means for entering the diameter of the rim 3 by an operator.

Specifically, once the diameter of the rim 3 is entered, the management and control unit 44 automatically adjusts the operation of the tyre changing machine 1 thanks to its special configuration and to the data provided for by the position sensing means 45, 46, 47.

The operation of the tyre changing machine according to the invention is as follows.

The operator, through the user interface 48 enters the diameter of the rim 3 which is sent to the management and control unit 44.

The management and control unit 44 operates on the lifting/lowering means 23, particularly on the actuator device 26, which cause the sliding of the gripping and rotational means 16 along the lifting/lowering direction L by positioning them at a height related to the entered diameter of the rim 3.

Next, the operator makes the wheel 4 roll onto the ground keeping it in a vertical position, that is, with the tread 8 contacting the ground, and positions the wheel 4 in the proximity of the gripping and rotational means 16.

Next, the gripping and rotational means 16 contact the rim 3 and, specifically, the jaws 18 grip the rim 3 itself.

The lifting/lowering means 23 lift the gripping and rotational means 16, thus also lifting the wheel 4 previously engaged by the gripping unit 17, until a first height is reached.

At the same time, the second bead-breaking assembly 34 is lifted thanks to the combined action of the lifting/lowering means 23 and of the means for setting in motion 38.

The management and control unit 44 operates on the sliding means 31 by causing the first bead-breaking assembly 27 to slide towards the tyre 2.

At the same time, the management and control unit 44 operates on the means for setting in motion 38 to position the second bead-breaking assembly 34 to the first work configuration.

The bead-breaking element 29 and the bead-breaking device 41 contact the first flange element 5 and the second flange element 6, respectively.

Usefully, the tyre changing machine 1 comprises pressure sensors which sense the contact between the bead-breaking element 29 and the first flange element 5 and between the bead-breaking device 41 and the second flange element 6, thus achieving a controlled contact between the bead-breaking assemblies 27, 34 and the flange elements 5, 6.

The position sensing means 45, 46, 47 communicate the position of the first bead-breaking assembly 27 and of the second bead-breaking assembly 34 to the management and control unit 44, which is able to derive the width of the rim 3, i.e., the distance between the flange elements 5, 6.

The width of the rim 3, together with its diameter, is a datum used by the management and control unit 44 to position the moving parts of the tyre changing machine 1 at the optimal distances from the rim 3 and from the tyre 2 to perform automatic operation.

Next, the lifting/lowering means 23 lower the gripping and rotational means 16, and, at the same time, the second bead-breaking assembly 34 to a second height so that the bead-breaking element 29 and the bead-breaking device 41 abut against the first bead 11 and the second bead 12, respectively.

The sliding means 31 continue to slide the first bead-breaking assembly 27 away from the post element 14, so that the first bead 11 is moved away from the first flange element 5.

At the same time, the means for setting in motion 38 causes the translation element 40 to move towards the post element 14 so as to move the second bead 12 away from the second flange element 6.

Setting the wheel 4 in rotation by the gripping and rotational means 16 allows the beads 11, 12 to be moved away from the flange elements 5, 6 over the entire circumferential perimeter of the rim 3, so that the wheel 4 is bead-broken.

The operator may possibly smear a lubricant between the beads 11, 12 and the flange elements 5, 6 thus promoting bead breaking of the tyre 2.

The second bead-breaking assembly 34 is placed to the second work configuration and abuts in the proximity of the slot 35.

At this point, the sliding means 31 move the first bead-breaking assembly 27 towards the first bead 11, and the means for setting in motion 38 make the translation element 40 slide away from the post element 14, towards the second bead 12.

In this way, the first bead-breaking assembly 27 and the second bead-breaking assembly 34 exert two pushes in substantially parallel but opposite directions on the tyre 2, so as to facilitate the complete removal of the tyre 2 from the rim 3.

At the same time, the gripping and rotational means 16 set the rim 3 in rotation around the axis of rotation R, thus promoting the removal of the first bead 11 over the entire circumferential perimeter of the rim 3.

It has in practice been ascertained that the present invention achieves the intended objects.

The special expedient of providing a first bead-breaking assembly positioned at the upper half of the wheel and, specifically, in the second quadrant, and a second bead-breaking assembly, positioned at the lower half of the wheel and, specifically, in the third quadrant, makes it easier to get the tyre out of the rim.

Particularly, the second bead-breaking assembly can be allocated in the slot bounded by the first bead and by the rim, when the second bead is already removed, thus pushing the first bead without it contacting the rim.

In this way, the force that the first bead-breaking assembly has to exert on the first bead to remove it is also greatly reduced.

In addition, the width of the staggering angle between the two bead-breaking assemblies facilitates the same bead-breaking phase.

Additionally, the special positioning of the bead-breaking assemblies in space allows the overall dimensions of the tyre changing machine to be greatly reduced according to the invention because the first bead-breaking assembly, being allocated in the second quadrant, is not in the way of the operator who is operating the tyre changing machine.

## Claims

1. Tyre changing machine (1), particularly for large wheels, comprising:
- at least one holding frame (13) on the ground;
- gripping and rotational means (16) associated with the holding frame (13), adapted to grip at least one wheel (4), provided with at least one rim (3) and with at least one tyre (2), and to move said rim (3) in rotation around a substantially horizontal axis of rotation (R), said rim (3) comprising at least a first flange element (5) and at least a second flange element (6) and said tyre (2) comprising at least a first sidewall (9), provided with at least a first bead (11) approachable to said first flange element (5), and at least a second sidewall (10), provided with at least a second bead (12) approachable to said second flange element (6);
- lifting/lowering means (23) of said gripping and rotational means (16) along a substantially vertical lifting/lowering direction (L), said lifting/lowering means (23) being associated with said holding frame (13);
- at least a first bead-breaking assembly (27) adapted to break said first bead (11) when mounted on said rim (3) and associated in a sliding manner with said holding frame (13) along at least one substantially horizontal direction of sliding (S); and
- at least a second bead-breaking assembly (34) adapted to break said second bead (12) when mounted on said rim (3), associated in a movable manner with said holding frame (13) and alternatively positionable in at least a first work configuration, wherein it is positioned at said second bead (12), and in at least a second work configuration, wherein it is positioned at said first bead (11) is located and is adapted to exert a thrust on said tyre (2) along a direction of thrust (P) substantially parallel to said axis of rotation (R);
wherein:
- said gripping and rotational means (16) are adapted to define at least one working plane (C) of said tyre changing machine (1), said working plane (C) being substantially perpendicular to said axis of rotation (R) and being splittable into at least one lower half-plane (C1), positioned inferiorly to said axis of rotation (R), and into at least one upper half-plane (C2) positioned superiorly to said axis of rotation (R);
- said first bead-breaking assembly (27) is positioned at said upper half-plane (C2) and said second bead-breaking assembly (34) is positioned at said lower half-plane (C1), said bead-breaking assemblies (27, 34) being mutually staggered by a staggering angle (α) ranging between 90° and 180°;
**characterized by** the fact that it comprises movement means (36) of said second bead-breaking assembly (34) along at least one substantially vertical direction of movement (M), said movement means (36) being associated with said holding frame (13).

2. Tyre changing machine (1) according to claim 1, **characterized by** the fact that in a front view said working plane (C) is splittable into at least a first quadrant (Q1), into at least a second quadrant (Q2), into at least a third quadrant (Q3), positioned below said first quadrant (Q1), and into at least a fourth quadrant (Q4), positioned below said second quadrant (Q2), wherein said first quadrant (Q1) and second quadrant (Q2) define said upper half-plane (C2) positioned superiorly to said axis of rotation (R) and wherein said third quadrant (Q3) and said fourth quadrant (Q4) define said lower half-plane (C1) positioned inferiorly to said axis of rotation (R), said first bead-breaking assembly (27) being positioned at said second quadrant (Q2) and said second bead-breaking assembly (34) being positioned at said third quadrant (Q3).

3. Tyre changing machine (1) according to one or more of the preceding claims, **characterized by** the fact that said first bead-breaking assembly (27) extends along an axis which is oriented with respect to a substantially vertical axis of orientation (Z) by a first angle of inclination (β), ranging between 0° and 90°, and by the fact that said second bead-breaking assembly (34) extends along an axis which is oriented with respect to said axis of orientation (Z) by a second angle of inclination (γ), ranging between 190° and 260°.

4. Tyre changing machine (1) according to one or more of the preceding claims, **characterized by** the fact that it comprises sliding means (31) of said first bead-breaking assembly (27) along said direction of sliding (S), said sliding means (31) being associated with said holding frame (13).

5. Tyre changing machine (1) according to one or more of the preceding claims, **characterized by** the fact that said lifting/lowering means (23) comprise:
- at least one guiding assembly (24a, 24b, 24c) having a substantially longitudinal extension along said lifting/lowering direction (L);
- at least one sliding element (25) associated in a sliding manner with said guiding assembly (24a, 24b, 24c) along said lifting/lowering direction (L), said gripping and rotational means (16) being associated with said sliding element (25);
- at least one actuator device (26) associated with said holding frame (13) and with said sliding element (25) and adapted to move in a sliding manner said sliding element (25) with respect to said guiding assembly (24a, 24b, 24c).

6. Tyre changing machine (1) according to one or more of the preceding claims, **characterized by** the fact that:
- said movement means (36) comprise at least one sliding carriage (37) assembled on said guiding assembly (24a, 24b, 24c) in a sliding manner along said direction of movement (M), said second bead-breaking assembly (34) being associated with said sliding carriage (37);
- said sliding element (25) is adapted to contact said sliding carriage (37) and to move it along said direction of movement (M), said sliding element (25) being moved along said lifting/lowering direction (L).

7. Tyre changing machine (1) according to one or more of the preceding claims, **characterized by** the fact that it comprises means for setting in motion (38) said second bead-breaking assembly (34) between said first work configuration and said second work configuration, said means for setting in motion (38) being associated with said movement means (36).

8. Tyre changing machine (1) according to one or more of the preceding claims, **characterized by** the fact that said means for setting in motion (38) comprise:
- at least one holding element (39) hinged to said sliding carriage (37) around an axis substantially parallel to said axis of rotation (R);
- at least one translation element (40) sliding with respect to said holding element (39) along said direction of thrust (P), said second bead-breaking assembly (34) being associated with said translation element (40);
- at least a first actuation unit associated with said sliding carriage (37) and with said holding element (39) for the rotation of said holding element (39); and
- at least a second actuation unit associated with said holding element (39) and with said translation element (40) for the sliding of said translation element (40).

9. Tyre changing machine (1) according to one or more of the preceding claims, **characterized by** the fact that said second bead-breaking assembly (34) comprises at least one bead-breaking device (41) having a substantially truncated-cone conformation and associated with said translation element (40) in a rotatable manner around a rolling axis (T) substantially incident and perpendicular to said axis of rotation (R).

## Patentansprüche

1. Reifenwechselmaschine (1), insbesondere für große Räder, umfassend:
- mindestens einen Halterahmen (13) auf dem Boden;
- Greif- und Drehmittel (16), die mit dem Halterahmen (13) verbunden sind und dazu ausgebildet sind, mindestens ein Rad (4) zu greifen, das mit mindestens einer Felge (3) und mit mindestens einem Reifen (2) versehen ist, und die Felge (3) in Drehung um eine im Wesentlichen horizontale Drehachse (R) zu versetzen, wobei die Felge (3) mindestens ein erstes Flanschelement (5) und mindestens ein zweites Flanschelement (6) umfasst und der Reifen (2) mindestens eine erste Seitenwand (9), die mit mindestens einem ersten Wulst (11) versehen ist, der an das erste Flanschelement (5) herangeführt werden kann, und mindestens eine zweite Seitenwand (10) umfasst, die mit mindestens einem zweiten Wulst (12) versehen ist, der an das zweite Flanschelement (6) herangeführt werden kann;
- Mittel zum Heben/Senken (23) der Greif- und Drehmittel (16) entlang einer im Wesentlichen vertikalen Hebe-/Senkrichtung (L), wobei die Mittel zum Heben/Senken (23) mit dem Halterahmen (13) verbunden sind;
- mindestens eine erste Wulst-Brech-Baugruppe (27), die dazu ausgebildet ist, den ersten Wulst (11) zu brechen, wenn er auf der Felge (3) montiert ist, und die entlang mindestens einer im Wesentlichen horizontalen Gleitrichtung (S) verschiebbar mit dem Halterahmen (13) verbunden ist; und
- mindestens eine zweite Wulst-Brech-Baugruppe (34), die dazu ausgebildet ist, den zweiten Wulst (12) zu brechen, wenn er auf der Felge (3) montiert ist, die auf bewegliche Weise mit dem Halterahmen (13) verbunden ist und alternativ in mindestens einer ersten Arbeitskonfiguration, in der sie an dem zweiten Wulst (12) positioniert ist, und in mindestens einer zweiten Arbeitskonfiguration positionierbar ist, in der sie an dem ersten Wulst (11) positioniert ist, und die dazu ausgebildet ist, einen Schub auf den Reifen (2) entlang einer Schubrichtung (P) auszuüben, die im Wesentlichen parallel zu der Drehachse (R) ist;
wobei:
- die Greif- und Drehmittel (16) dazu ausgebildet sind, mindestens eine Arbeitsebene (C) der Reifenwechselmaschine (1) zu definieren, wobei die Arbeitsebene (C) im Wesentlichen senkrecht zur Drehachse (R) ist und teilbar ist in mindestens eine untere Halbebene (C1), die unterhalb der Drehachse (R) positioniert ist, und in mindestens eine obere Halbebene (C2), die oberhalb der Drehachse (R) positioniert ist,
- die erste Wulst-Brech-Baugruppe (27) an der oberen Halbebene (C2) und die zweite Wulst-Brech-Baugruppe (34) an der unteren Halbebene (C1) positioniert ist, wobei die Wulst-Brech-Baugruppen (27, 34) gegenseitig um einen Versetzungswinkel (α) versetzt sind, der zwischen 90° und 180° liegt;
**dadurch gekennzeichnet, dass** sie Mittel zur Bewegung (36) der zweiten Wulst-Brech-Baugruppe (34) entlang mindestens einer im Wesentlichen vertikalen Bewegungsrichtung (M) umfasst, wobei die Mittel (36) zur Bewegung mit dem Halterahmen (13) verbunden sind.

2. Reifenwechselmaschine (1) nach Anspruch 1, **dadurch gekennzeichnet, dass** in einer Vorderansicht die Arbeitsebene (C) in mindestens einen ersten Quadranten (Q1), in mindestens einen zweiten Quadranten (Q2), in mindestens einen dritten Quadranten (Q3), der unter dem ersten Quadranten (Q1) angeordnet ist, und in mindestens einen vierten Quadranten (Q4), unterhalb des zweiten Quadranten (Q2) positioniert ist, teilbar ist, wobei der erste Quadrant (Q1) und der zweite Quadrant (Q2) die obere Halbebene (C2) definieren, die oberhalb der Drehachse (R) positioniert ist, und wobei der dritte Quadrant (Q3) und der vierte Quadrant (Q4) die untere Halbebene (C1) definieren, die unterhalb der Drehachse (R) positioniert ist, wobei die erste Wulst-Brech-Baugruppe (27) am zweiten Quadranten (Q2) und die zweite Wulst-Brech-Baugruppe (34) am dritten Quadranten (Q3) positioniert ist.

3. Reifenwechselmaschine (1) gemäß einem oder mehreren der vorstehenden Ansprüche, **dadurch gekennzeichnet, dass** sich die erste Wulst-Brech-Baugruppe (27) entlang einer Achse erstreckt, die in Bezug auf eine im Wesentlichen vertikale Ausrichtungsachse (Z) in einem ersten Neigungswinkel (β) ausgerichtet ist, der zwischen 0° und 90° liegt, und dadurch, dass sich die zweite Wulst-Brech-Baugruppe (34) entlang einer Achse erstreckt, die in Bezug auf die Ausrichtungsachse (Z) in einem zweiten Neigungswinkel (γ) ausgerichtet ist, der zwischen 190° und 260° liegt.

4. Reifenwechselmaschine (1) gemäß einem oder mehreren der vorstehenden Ansprüche, **dadurch gekennzeichnet, dass** sie Mittel zum Gleiten (31) der ersten Wulst-Brech-Baugruppe (27) entlang der Gleitrichtung (S) umfasst, wobei die Mittel zum Gleiten (31) mit dem Halterahmen (13) verbunden sind.

5. Reifenwechselmaschine (1) gemäß einem oder mehreren der vorstehenden Ansprüche, **dadurch gekennzeichnet, dass** die Mittel zum Heben/Senken (23) Folgendes umfassen:
- mindestens eine Führungsanordnung (24a, 24b, 24c) mit einer im Wesentlichen länglichen Ausdehnung entlang der Hebe-/Senkrichtung (L);
- mindestens ein Gleitelement (25), das mit der Führungsanordnung (24a, 24b, 24c) in gleitender Weise entlang der Hebe-/Senkrichtung (L) verbunden ist, wobei die Greif- und Drehmittel (16) mit dem Gleitelement (25) verbunden sind;
- mindestens eine Betätigungsvorrichtung (26), die mit dem Halterahmen (13) und dem Gleitelement (25) verbunden ist und dazu ausgebildet ist, das Gleitelement (25) in Bezug auf die Führungsanordnung (24a, 24b, 24c) gleitend zu bewegen.

6. Reifenwechselmaschine (1) gemäß einem oder mehreren der vorstehenden Ansprüche, **dadurch gekennzeichnet, dass**
- die Mittel zur Bewegung (36) mindestens einen Gleitschlitten (37) umfassen, der auf der Führungsanordnung (24a, 24b, 24c) in gleitender Weise entlang der Bewegungsrichtung (M) montiert ist, wobei die zweite Wulst-Brech-Baugruppe (34) mit dem Gleitschlitten (37) verbunden ist;
- das Gleitelement (25) dazu ausgebildet ist, den Gleitschlitten (37) zu berühren und ihn entlang der Bewegungsrichtung (M) zu bewegen, wobei das Gleitelement (25) entlang der Hebe-/Senkrichtung (L) bewegt wird.

7. Reifenwechselmaschine (1) gemäß einem oder mehreren der vorstehenden Ansprüche, **dadurch gekennzeichnet, dass** sie Mittel zur Inbewegungsetzung (38) der zweiten Wulst-Brech-Baugruppe (34) zwischen der ersten Arbeitskonfiguration und der zweiten Arbeitskonfiguration umfasst, wobei die Mittel zur Inbewegungsetzung (38) mit den Mitteln zur Bewegung (36) verbunden sind.

8. Reifenwechselmaschine (1) gemäß einem oder mehreren der vorstehenden Ansprüche, **dadurch gekennzeichnet, dass** die Mittel zur Inbewegungsetzung (38) Folgendes umfassen:
- mindestens ein Halteelement (39), das an dem Gleitschlitten (37) um eine Achse angelenkt ist, die im Wesentlichen parallel zu der Drehachse (R) verläuft;
- mindestens ein Translationselement (40), das in Bezug auf das Halteelement (39) entlang der Schubrichtung (P) gleitet, wobei die zweite Wulst-Brech-Baugruppe (34) mit dem Translationselement (40) verbunden ist;
- mindestens eine erste Betätigungseinheit, die mit dem Gleitschlitten (37) und dem Halteelement (39) verbunden ist, um das Halteelement (39) zu drehen;
und
- mindestens eine zweite Betätigungseinheit, die mit dem Halteelement (39) und dem Translationselement (40) verbunden ist, um das Translationselement (40) zu verschieben.

9. Reifenwechselmaschine (1) gemäß einem oder mehreren der vorstehenden Ansprüche, **dadurch gekennzeichnet, dass** die zweite Wulst-Brech-Baugruppe (34) mindestens eine Wulst-Brech-Vorrichtung (41) umfasst, die im Wesentlichen kegelstumpfförmig ist und mit dem Translationselement (40) auf drehbare Weise um eine Rollachse (T) verbunden ist, die im Wesentlichen senkrecht zur Drehachse (R) verläuft.

## Revendications

1. - Machine de changement de pneus (1), en particulier pour roues grandes, comprenant :
- au moins un bâti de maintien (13) sur le sol ;
- des moyens de saisie et de rotation (16) associés au bâti de maintien (13), agencés pour saisir au moins une roue (4), comportant au moins une jante (3) et au moins un pneu (2), et pour déplacer ladite jante (3) en rotation autour d'un axe de rotation (R) sensiblement horizontal, ladite jante (3) comprenant au moins un premier élément de joue (5) et au moins un second élément de joue (6), et ledit pneu (2) comprenant au moins un premier flanc (9), comportant au moins un premier talon (11) apte à approcher ledit premier élément de joue (5), et au moins un second flanc (10), comportant au moins un second talon (12) apte à approcher ledit second élément de joue (6) ;
- des moyens de levage/abaissement (23) desdits moyens de saisie et de rotation (16) selon une direction de levage/abaissement (L) sensiblement verticale, lesdits moyens de levage/abaissement (23) étant associés audit bâti de maintien (13) ;
- au moins un premier ensemble de décollage de talon (27) agencé pour décoller ledit premier talon (11) lorsqu'il est monté sur ladite jante (3) et associé d'une manière coulissante audit bâti de maintien (13) selon au moins une direction de coulissement (S) sensiblement horizontale ; et
- au moins un second ensemble de décollage de talon (34) agencé pour décoller ledit second talon (12) lorsqu'il est monté sur ladite jante (3), associé d'une manière mobile audit bâti de maintien (13) et positionnable de manière alternée dans au moins une première configuration de travail, dans laquelle il est positionné audit second talon (12), et dans au moins une seconde configuration de travail, dans laquelle il est positionné audit premier talon (11), situé et agencé pour exercer une poussée sur ledit pneu (2) selon une direction de poussée (P) sensiblement parallèle audit axe de rotation (R) ;
dans laquelle :
- lesdits moyens de saisie et de rotation (16) sont agencés pour définir au moins un plan de travail (C) de ladite machine de changement de pneus (1), ledit plan de travail (C) étant sensiblement perpendiculaire audit axe de rotation (R) et étant apte à être divisé en au moins un demi-plan inférieur (C1), positionné au-dessous dudit axe de rotation (R), et en au moins un demi-plan supérieur (C2) positionné au-dessus dudit axe de rotation (R) ;
- ledit premier ensemble de décollage de talon (27) est positionné audit demi-plan supérieur (C2) et ledit second ensemble de décollage de talon (34) est positionné audit demi-plan inférieur (C1), lesdits ensembles de décollage de talon (27, 34) étant mutuellement décalés d'un angle de décalage (α) compris dans la plage entre 90° et 180° ;
**caractérisée par le fait qu'**elle comprend des moyens de déplacement (36) dudit second ensemble de décollage de talon (34) selon au moins une direction de déplacement (M) sensiblement verticale, lesdits moyens de déplacement (36) étant associés audit bâti de maintien (13).

2. - Machine de changement de pneus (1) selon la revendication 1, **caractérisée par le fait que**, dans une vue de face, ledit plan de travail (C) est apte à être divisé en au moins un premier quadrant (Q1), au moins un deuxième quadrant (Q2), au moins un troisième quadrant (Q3), positionné sous ledit premier quadrant (Q1), et au moins un quatrième quadrant (Q4), positionné sous ledit deuxième quadrant (Q2), ledit premier quadrant (Q1) et ledit deuxième quadrant (Q2) définissant ledit demi-plan supérieur (C2) positionné au-dessus dudit axe de rotation (R), et ledit troisième quadrant (Q3) et ledit quatrième quadrant (Q4) définissant ledit demi-plan inférieur (C1) positionné au-dessous dudit axe de rotation (R), ledit premier ensemble de décollage de talon (27) étant positionné audit deuxième quadrant (Q2) et ledit second ensemble de décollage de talon (34) étant positionné audit troisième quadrant (Q3).

3. - Machine de changement de pneus (1) selon une ou plusieurs des revendications précédentes, **caractérisée par le fait que** ledit premier ensemble de décollage de talon (27) s'étend selon un axe qui est orienté par rapport à un axe d'orientation (Z) sensiblement vertical à un premier angle d'inclinaison (β), compris dans la plage entre 0° et 90°, et **par le fait que** ledit second ensemble de décollage de talon (34) s'étend selon un axe qui est orienté par rapport audit axe d'orientation (Z) à un second angle d'inclinaison (γ), compris dans la plage entre 190° et 260°.

4. - Machine de changement de pneus (1) selon une ou plusieurs des revendications précédentes, **caractérisée par le fait qu'**elle comprend des moyens de coulissement (31) dudit premier ensemble de décollage de talon (27) selon ladite direction de coulissement (S), lesdits moyens de coulissement (31) étant associés audit bâti de maintien (13).

5. - Machine de changement de pneus (1) selon une ou plusieurs des revendications précédentes, **caractérisée par le fait que** lesdits moyens de levage/abaissement (23) comprennent :
- au moins un ensemble de guidage (24a, 24b, 24c) ayant une extension sensiblement longitudinale selon ladite direction de levage/abaissement (L) ;
- au moins un élément coulissant (25) associé d'une manière coulissante audit ensemble de guidage (24a, 24b, 24c) selon ladite direction de levage/abaissement (L), lesdits moyens de saisie et de rotation (16) étant associés audit élément coulissant (25) ;
- au moins un dispositif actionneur (26) associé audit bâti de maintien (13) et audit élément coulissant (25) et agencé pour déplacer d'une manière coulissante ledit élément coulissant (25) par rapport audit ensemble de guidage (24a, 24b, 24c).

6. - Machine de changement de pneus (1) selon une ou plusieurs des revendications précédentes, **caractérisée par le fait que** :
- lesdits moyens de déplacement (36) comprennent au moins un chariot coulissant (37) assemblé sur ledit ensemble de guidage (24a, 24b, 24c) d'une manière coulissante selon ladite direction de déplacement (M), ledit second ensemble de décollage de talon (34) étant associé audit chariot coulissant (37) ;
- ledit élément coulissant (25) est agencé pour entrer en contact avec ledit chariot coulissant (37) et pour le déplacer selon ladite direction de déplacement (M), ledit élément coulissant (25) étant déplacé selon ladite direction de levage/abaissement (L).

7. - Machine de changement de pneus (1) selon une ou plusieurs des revendications précédentes, **caractérisée par le fait qu'**elle comprend des moyens de mise en mouvement (38) dudit second ensemble de décollage de talon (34) entre ladite première configuration de travail et ladite seconde configuration de travail, lesdits moyens de mise en mouvement (38) étant associés auxdits moyens de déplacement (36).

8. - Machine de changement de pneus (1) selon une ou plusieurs des revendications précédentes, **caractérisée par le fait que** lesdits moyens de mise en mouvement (38) comprennent :
- au moins un élément de maintien (39) articulé audit chariot coulissant (37) autour d'un axe sensiblement parallèle audit axe de rotation (R) ;
- au moins un élément de translation (40) coulissant par rapport audit élément de maintien (39) selon ladite direction de poussée (P), ledit second ensemble de décollage de talon (34) étant associé audit élément de translation (40) ;
- au moins une première unité d'actionnement associée audit chariot coulissant (37) et audit élément de maintien (39) pour la rotation dudit élément de maintien (39) ; et
- au moins une seconde unité d'actionnement associée audit élément de maintien (39) et audit élément de translation (40) pour le coulissement dudit élément de translation (40) .

9. - Machine de changement de pneus (1) selon une ou plusieurs des revendications précédentes, **caractérisée par le fait que** ledit second ensemble de décollage de talon (34) comprend au moins un dispositif de décollage de talon (41) ayant une conformation sensiblement tronconique et associé audit élément de translation (40) d'une manière rotative autour d'un axe de roulement (T) sensiblement incident et perpendiculaire audit axe de rotation (R).
